**Europäisches Patentamt**

**European Patent Office**

**Office européen des brevets**

(19)

(11) Veröffentlichungsnummer: **0 075 738**

**B1**

(12) # EUROPÄISCHE PATENTSCHRIFT

(45) Veröffentlichungstag der Patentschrift:
12.08.87

(51) Int. Cl.⁴: **B 62 D 6/02**

(21) Anmeldenummer: **82107933.2**

(22) Anmeldetag: **28.08.82**

(54) **Vorrichtung in einer Servolenkung eines Fahrzeugs.**

(30) Priorität: **16.09.81 DE 3136706**

(43) Veröffentlichungstag der Anmeldung:
**06.04.83 Patentblatt 83/14**

(45) Bekanntmachung des Hinweises auf die Patenterteilung:
**12.08.87 Patentblatt 87/33**

(84) Benannte Vertragsstaaten:
**DE FR GB IT SE**

(56) Entgegenhaltungen:
**DE-A-2 851 773**
**DE-A-2 906 048**
**DE-A-2 948 228**
**DE-B-2 234 718**
**GB-A-1 379 606**
**US-A-4 071 109**

(73) Patentinhaber: **ZAHNRADFABRIK FRIEDRICHSHAFEN AKTIENGESELLSCHAFT, Löwentaler Strasse 100 Postfach 2520, D-7990 Friedrichshafen 1 (DE)**

(72) Erfinder: **Lang, Armin, Ing.grad., Rheinstrasse 10, D-7070 Schwäbisch Gmünd (DE)**
Erfinder: **Cerny, Walter, Dipl.- Ing., Amselweg 3, D-7075 Mutlangen (DE)**

EP 0 075 738 B1

LIBER, STOCKHOLM 1987

## Beschreibung

Die Erfindung bezieht sich auf eine Vorrichtung in einer Servolenkung eines Fahrzeugs zur Steuerung einer elektromagnetisch betätigbaren, hydraulischen Drosselstelle für die geschwindigkeitsabhängige Einstellung der verfügbar gehaltenen Hilfskraft nach dem Oberbegriff des Anspruches 1.

Eine derartige Vorrichtung ist bekannt aus der DE-A- 29 06 048. In dieser Vorrichtung ist als Drosselstelle ein Wandler vorgesehen, der von analogen Signalen, in Abhängigkeit von der Fahrgeschwindigkeit des Fahrzeugs, angesteuert wird.

Der Erfindung liegt die Aufgabe zugrunde, eine elektrisch Betätigbare Drosselstelle in der Form eines Wandlers mit nicht linearer Kennlinie derart zu steuern, daß die Ausgangsspannung für den Wandler zur geschwindigkeitsabhängigen Beeinflussung der Servolenkung in bezug auf die Fahrgeschwindigkeit beliebig variierbar ist.

Erfindungsgemäß wird diese Aufgabe durch die im Anspruch 1 gekennzeichnete Vorrichtung gelöst. .

Die Übertragungsfunktion der Vorrichtung, d. h. die Beziehung zwischen der Ausgangsspannung für den Wandler und der Fahrgeschwindigkeit, kann dadurch sehr einfach variiert werden, daß die in dem Festwertspeicher eingespeicherte Funktionstabelle ausgetauscht wird. Außerdem weist die erfindungsgemäße Vorrichtung folgende weiteren Vorteile auf: bei ausbleibendem, geschwindigkeitsahhängigem Signal bleibt die Vorrichtung funktionsfähig, da Vorkehrungen gegen Fehlsteuerungen getroffen sind. Die verwendete Endstufe einer Elektronik wird mit sehr geringer Verlustleistung hetrieben, so daß keine Maßnahmen für eine Wärmeabführung der Schaltelemente nötig sind und die gesamte Vorrichtung sehr klein aufgebaut werden kann. Eine Überwachungsschaltung stellt sicher, daß auch bei Ausfall von Tachoimpulsen vorher gespeicherte Daten nicht verloren gehen, deshalb arbeitet die Vorrichtung sehr betriebssicher.

Die Erfindung wird anhand mehrerer in der Zeichnung dargestellter Ausführungsbeispiele näher erläutert. Es zeigt

Fig. 1 die erfindungsgemäße Vorrichtung, im wesentlichen hestehend aus einem Vorwärtszähler, einem Zwischenspeicher, einem Festwertspeicher, Puffern, einem Impulslängenzähler, einer bistabilen Kippstufe, einer Endstufe und einem elektromechanischen, hydraulischen Wandler;

Fig. 2 ein Ausführungsbeispiel mit ähnlichem Aufbau wie in Fig. 1, jedoch mit einem zusätzlichen Vorteiler sowie einer symmetrisch an den Ausgängen der bistabilen Kippstufe angeschlossenen Endstufe für den Wandler.

Fig. 3 ein durch zusätzliches Einschalten eines Inverters vor einen der Puffer abgewandeltes Ausführungsbeispiel nach den Fig. 1 und 2,

Fig. 4 ein anderes Ausführungsbeispiel der Erfindung mit einem Mikroprozessor und einer Überwachungsschaltung,

Fig. 5 Impulsdiagramme aus der Überwachungsschaltung bei einwandfrei laufendem Mikroprozessor, und

Fig. 6 Impulsdiagramme aus der Überwachungsschaltung bei Auftreten eines Fehlers im Mikroprozessor.

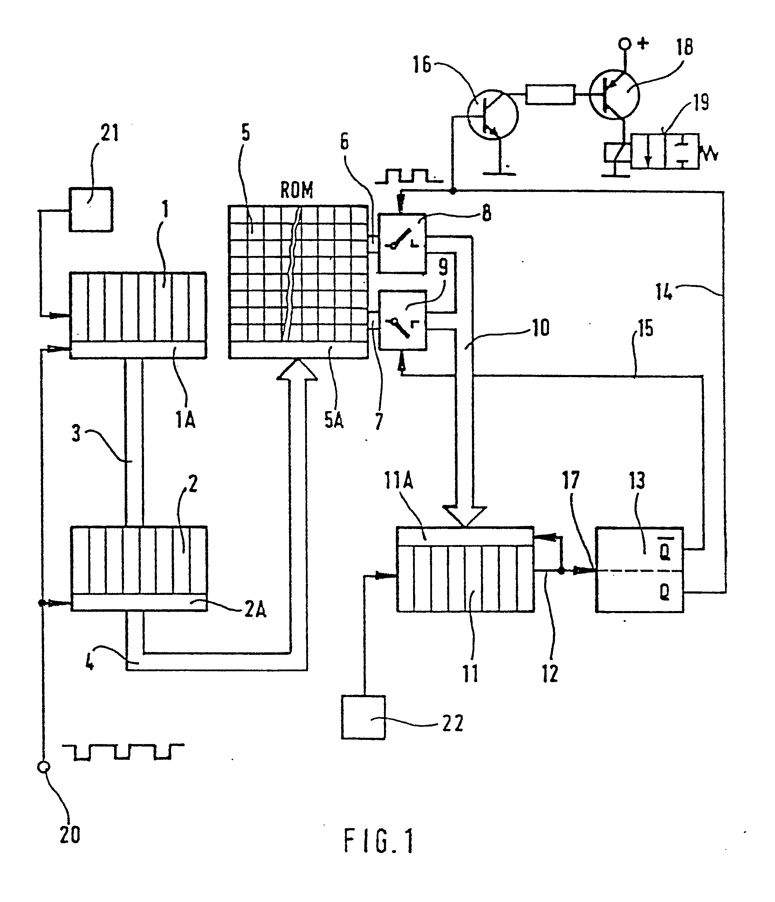

In einem Festwertspeicher 5 (Fig. 1), im allgemeinen auch als "ROM" bezeichnet, ist eine Funktionstabelle abgelegt. Über einen Bus 4 ist dem Festwertspeicher ein Zwischenspeicher 2 mit einem Setzeingang 2A vorgeschaltet. Über einen Bus 3 ist dem Zwischenspeicher 2 seinerseits ein Vorwärtszähler 1 mit einem Rücksetzeingang 1A vorgeschaltet.

Über eine Klemme 20 wird ein impulsförmiges Eingangssignal eines Fahrzeugs eingespeist. Die Periodendauer des Signals ist umgekehrt proportional der gefahrenen Geschwindigkeit. Das Signal wird vorzugsweise vom Tacho bzw. von einem ihm vorgeschalteten Sensor des Fahrzeugs geliefert. Das Signal bewirkt zunächst ein Freimachen des Setzeingangs 2A des Zwischenspeichers 2. Dieser übernimmt die Daten des Vorwärtszählers 1, der mit einer konstanten Taktfrequenz hochzählt, die ihm von einem Taktgeber 21 zugeführt wird. Nach Übernahme der Daten in den Zwischenspeicher 2 wird der Vorwärtszähler 1 zurückgesetzt. Die so gewonnenen Daten sind ein unmittelbares Maß für die Periodendauer des über die Klemme 20 angelieferten Signals. Hierdurch ist gewährleistet, daß beim Ausbleiben des Signals kein neuer Wert in den Zwischenspeicher 2 übernommen wird. Mit der auf diese Weise gewonnenen Geschwindigkeitsinformation wird die in dem Festwertspeicher 5 (ROM) abgelegte Funktionstabelle adressiert.

Am Ausgang des Festwertspeichers 5 können die Daten für das Impuls-Pausen-Verhältnis des Ausgangssignals entnommen werden, das der Betätigung eines Wandlers 19 dient. Werden im Festwertspeicher 5 (ROM) sowohl die Daten für die Impulszeit als auch für die Impulspausenzeit abgelegt, muß der Festwertspeicher entsprechend breit sein, weil man andernfalls eine entsprechend geringere Auflösung erhält.

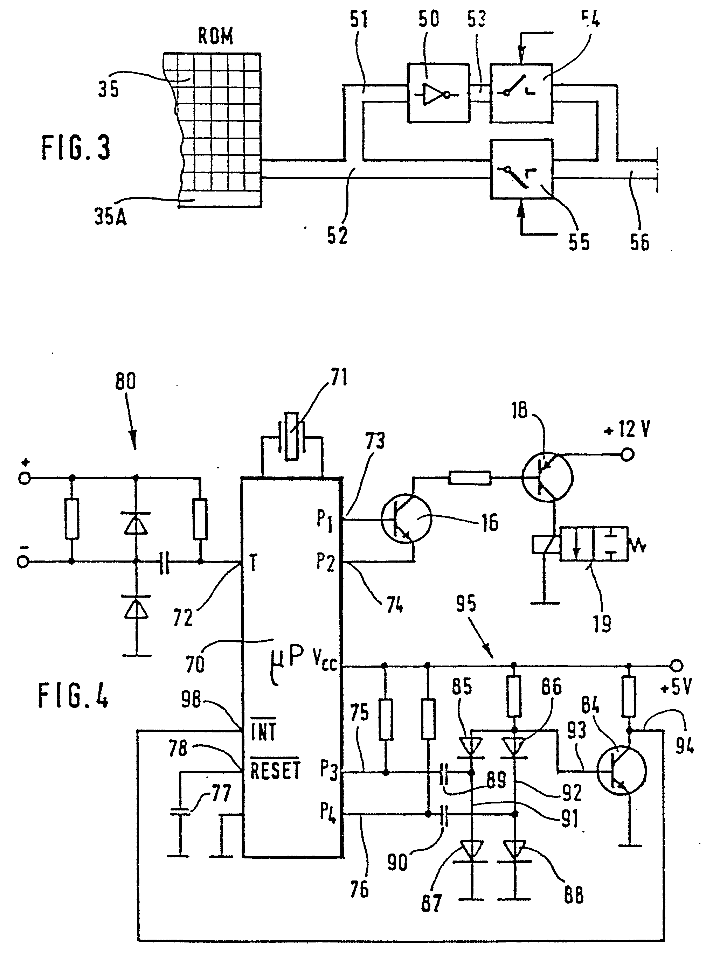

Will man die gesamte Speicherbreite ausnützen, so ist dies nach einem Ausführungsbeispiel gemäß Fig. 3 möglich. Hier wird ein zusätzlicher Inverter 50 zwischen einen Festwertspeicher 35 (ROM) und einen Puffer 54 geschaltet und so die Impulspausenzeit als Komplement der Impulszeit errechnet. Der andere Puffer 55 liegt über einen Bus 52 unmittelbar am Ausgang des Festwertspeichers 35. Die Ausgänge der beiden puffer 54, 55 laufen in einem einzigen Bus 56 zusammen, der zum Impulslängenzähler 11 bzw. 41 führt.

Auch beim Ausführungsbeispiel gemäß Fig. 1 sind zwei Puffer 8, 9 über jeweils einen Bus 6 bzw. 7 am Ausgang des Festwertspeichers 5 angeschlossen. Der Festwertspeicher 5 wird über einen Eingang 5A adressiert. Die beiden Puffer 8, 9 sind über einen Bus 10 an einem Setzeingang 11A eines Impulslängenzählers 11 angeschlossen, der seinerseits von einem Taktgeber 22 konstante Taktimpulse zugeführt erhält.

Die vom Festwertspeicher 5 kommenden Impuls- bzw. Impulspausenwerte werden über die Puffer 8, 9, die schaltbar sind, wechselweise an den Setzeingang 11A des Impulslängenzählers 11 gegeben. Letzterer übernimmt jeweils bei Überlauf (Leitung 12) die an seinem Setzeingang 11A anstehenden Daten. Das auf der Leitung 12 erscheinende Überlaufsignal wird gleichzeitig an einen einzigen Eingang 17 einer bistabilen Kippstufe 13 geführt. Von dieser führen Leitungen 14, 15 zu den beiden Puffern 8, 9 zurück. Jeweils beim Ändern der Kipplage der bistabilen Kippstufe 13 erfolgt ein wechselweises Umschalten der Puffer 8 bzw. 9, von denen jeweils einer auf Durchlaß geschaltet wird. Dadurch entspricht das Ausgangssignal der bistabilen Kippstufe dem Ansteuersignal für den Wandler 19. An der einen, von der bistabilen Kippstufe 13 kommenden Leitung 14 ist eine mit Transistoren 16, 18 aufgebaute Endstufe für den Wandler 19 angeschlossen.

Weil die Impulslänge des geschwindigkeitsabhängigen Eingangssignals für die Vorrichtung in umgekehrtem Verhältnis zur Fahrgeschwindigkeit des Fahrzeugs steht, hat die im Festwertspeicher (ROM) abgelegte Tabelle nicht nur die Aufgabe, das Ausgangssignal der nichtlinearen Kennlinie des Wandlers an die verschiedenen Fahrzeuggegebenheiten anzupassen, sondern auch die einer Reziprokwertbildung.

Will man einen bestimmten Geschwindigkeitsbereich mit hinreichender Genauigkeit verarbeiten, so sind ein entsprechend breiter Vorwärtszähler 1 und ein entsprechend tiefer Festwertspeicher 5 erforderlich, weil bei hoher Geschwindigkeit, also kurzer periodendauer des fahrgeschwindigkeitsabhängigen Signals und niedrigem Adressenwert die Meßpunkte weit auseinanderliegen und bei niedriger Geschwindigkeit mehrere Adressen mit den gleichen Tabellenwerten gefüllt sind.

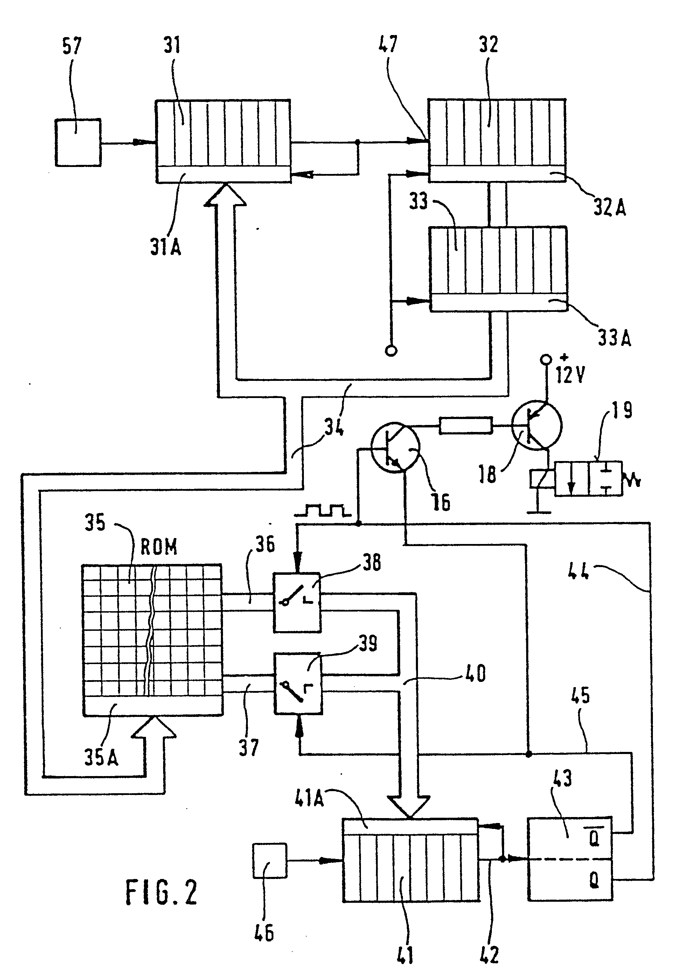

Die Verarbeitung eines bestimmten Geschwindigkeitsbereichs mit hinreichender Genauigkeit ist bei einem anderen Ausführungsbeispiel (Fig. 2) möglich. Hier wird zusätzlich ein Vorteiler 31 mit einem Setzeingang 31A eingesetzt. Der Vorteiler 31 ist durch einen Taktgeber 57 getaktet. Der Setzeingang 31A des Vorteilers 31 ändert abhängig vom Wert eines Zwischenspeichers 33 seinen Wert und damit das Teilerverhältnis. Hierdurch erhält man am Eingang 47 eines Vorwärtszählers 32 einen Takt variabler Frequenz, der sich mit zunehmender Periodendauer verlangsamt. Dadurch erreicht man eine größere Auflösung im Bereich hoher Geschwindigkeit und vermeidet im Bereich niedriger Geschwindigkeit die Belegung mehrerer Speicherplätze in einem Festwertspeicher 35 (ROM) mit gleichen Daten.

Die Ausgänge des Festwertspeichers 35 sind über jeweils einen Bus 36, 37 an Puffer 38 bzw. 39 angeschlossen, deren Ausgänge über einen Bus 40 mit einem Setzeingang 41A eines Impulslängenzählers 41 verbunden sind, dem ein Taktgeber 46 zugeordnet ist. Der Impulslängenzähler 41 ist über eine Leitung 42 an eine bistabile Kippstufe 43 angeschlossen, deren Ausgänge über Leitungen 44, 45 mit den Steuereingängen der Puffer 38 bzw. 39 verbunden sind. An die beiden Leitungen 44 bzw. 45 ist in Abweichung von dem Ausführungsbeispiel gemäß Fig. 1 die Endstufe für den Wandler 19 symmetrisch angeschlossen, denn der Transistor 16 ist mit seiner Basis an die Leitung 44 und mit seinem Emitter an die Leitung 45 angeschlossen, die von der Kippstufe 43 kommt und das invertierte Signal Q̄ führt (Fig. 2). Es ergibt sich eine logische Verknüpfung, bei der der Wandler 19 nur jeweils dann mit Strom versorgt wird, wenn der Ausgang Q HIGH und der Ausgang ŪQ LOW ist. Bei allen anderen Kombinationen ist der Transistor 18 gesperrt und der Wandler 19 erhält keinen Strom. Dies verringert die Möglichkeit einer Fehlsteuerung, was besonders bei einem im folgenden beschriebenen Ausführungsbeispiel gemäß Fig. 4 wichtig ist.

Die beschriebenen Vorrichtungen können bei einem weiteren Ausführungsbeispiel (Fig. 4) auch unter Verwendung eines Mikroprozessors 70 (Ein-Chip-Mikro-Controler) aufgebaut werden. Das geschwindigkeitsabhängige Signal wird über eine Eingangsschutzschaltung 80, die auch ein RC-Glied umfaßt, über einen Eingang 72 dem Mikroprozessor 70 zugeführt. Der Mikroprozessor 70 ist so aufgebaut bzw. programmiert, daß er an Ausgängen 73, 74 Signale Q und Q̄ liefert. Seine Taktfrequenz erhält der Mikroprozessor von einem Quarz 71.

Beim Einschalten der Vorrichtung, was gleichzeitig mit dem Einschalten der elektrischen Anlage des Fahrzeugs geschehen kann, also vorzugsweise mit dem Einschalten der Zündung, wird der Mikroprozessor 70 an seinem Eingang 78 in an sich bekannter Weise über einen Kondensator 77 initialisiert.

Es muß verhindert werden, daß der Mikroprozessor 70 durch unkontrollierte Störspannungen, die über die Versorgungs- oder Steuerleitungen oder auch durch unmittelbare Feldeinstrahlung an ihn gelangen, außer Tritt gerät. Da in seinem Festwertspeicher nicht nur Programmschritte, sondern auch die obenerwähnte Tabelle abgelegt ist, kann der Mikroprozessor 70 durch eine Störspannungsspitze und einen hierdurch hervorgerufenen, versehentlichen Sprung in diese Tabelle ungewollt einen Tabellenwert als Befehl interpretieren und so außer Tritt geraten. Zur Verhinderung einer solchen Störung muß eine zusätzliche Überwachungsschaltung vorgesehen werden.

Eine Überwachungsschaltung für einen Mikroprozessor ist aus der Zeitschrift Digital Design, November 1979, Seite 7879, bekannt. Diese Schaltung umfaßt einen freischwingenden Oszillator, der auf den RESET-Eingang des Mikroprozessors arbeitet. An die Schwingschaltung ist ein Port dynamisch angeschlossen, das die Schwingschaltung am Schwingen dann hindert, wenn am Port eine Wechselspannung anliegt. Die Überwachungsschaltung arbeitet nicht zu verlässig, weil nicht sichergestellt ist, daß an dem Port eine Wechselspannung tatsächlich fehlt, wenn der Mikroprozessor außer Tritt gerät. Vielmehr ist es nämlich wahrscheinlich, daß gerade dann an dem Port eine Wechselspannung auftritt und so die erforderliche Rückstellung des Mikroprozessors verhindert.

Im Gegensatz zu diesem Stand der Technik ist erfindungsgemäß eine Überwachungschaltung vorgesehen, die an mindestens zwei Ausgängen des Mikroprozessors angeschlossen ist, an denen HIGH-LOW-Signale anliegen, die ein Bitmuster aufweisen und auf eine dynamische Verknüpfungsschaltung geführt werden, die bei fehlerhaften Signalen ein INTERRUPT oder RESET auslöst.

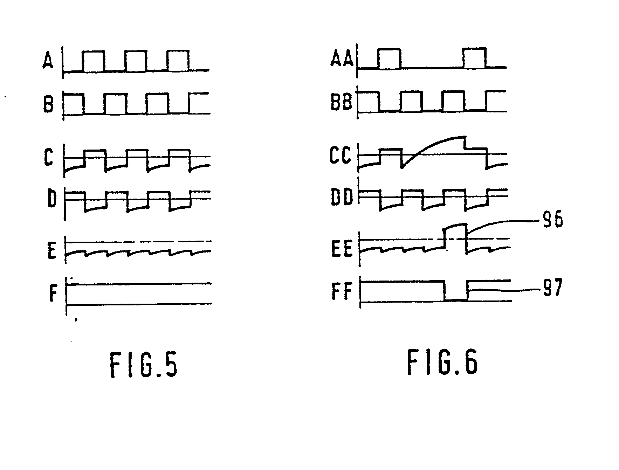

Bei einem Ausführungsbeispiel wird eine Überwachungsschaltung 95 (Fig. 4) eingesetzt, die an zwei Ausgängen 75, 76 des Mikroprozessors 70 angeschlossen ist. Das Bitmuster (Impulse A und B in Fig. 5) wird über Kondensatoren 89, 90 einer Gleichrichterbrückenschaltung 85, 86, 87, 88 zugeführt, wobei auf einer Leitung 91 Impulse C und auf einer Leitung 92 Impulse D entstehen. Hierdurch erscheinen auf einer Leitung 93 an der Basis eines Transistors 84 Impulse E (Fig. 5), die sich im negativen Spannungsbereich bewegen, so daß der Transistor 84 nicht leitet, sein Kollektor dadurch dauernd HIGH ist.

Tritt ein Fehler im Mikroprozessor auf, dann erscheinen an seinen Ausgängen 75, 76 Impulse, die nicht mehr der gewünschten Form (A bzw. B in Fig. 5) entsprechen. Beispielsweise erscheinen am Ausgang 75 des Mikroprozessors 70 Impulse AA (Fig. 6) die auf der Leitung 91 Impulse CC zur Folge haben. Hierdurch wird auf der Leitung 93 an der Basis des Transistors 84 ein Impuls 96 (EE in Fig. 6) erscheinen, der den Transistor 84 durchsteuert und einen Impuls 97 (FF in Fig. 6) am Kollektor des Transistors 84 zur Folge hat. Der Impuls 97 gelangt über eine Leitung 94 an einen INT-Eingang 98 des Mikroprozessors und bewirkt, daß dieser in seiner Arbeitsroutine zurückgeführt wird. Dabei bleiben vorher im Mikroprozessor gespeicherte Werte für die Lenkung erhalten, weil der Mikroprozessor nicht zurückgestellt wird. Bei Ausfall des Tachos gehen vorher gespeichert Daten somit nicht verloren.

**Bezugszeichnet**

1 Vorwärtszähler
1A Rücksetzeingang
2 Zwischenspeicher
2A Setzeingang
3 Bus
4 Bus
5 Festwertspeicher
5A Eingang
6 Bus
7 Bus
8 Puffer
9 Puffer
10 Bus
11 Impulslängenzähler
11A Setzeingang
12 Leitung
13 Kippstufe
14 Leitung
15 Leitung
16 Transistor
17 Eingang
18 Transistor
19 Wandler
20 Klemme
21 Taktgeber
22 Taktgeber
31 Vorteiler
31A Setzeingang
32 Vorwärtszähler
32A Rücksetzeingang
33 Zwischenspeicher
33A Setzeingang
34 Bus
35 Festwertspeicher
35A Eingang
36 Bus
37 Bus
38 Puffer
39 Puffer
40 Bus
41 Impulslängenzähler
41A Setzeingang
42 Leitung
43 Kippstufe
44 Leitung
45 Leitung
46 Taktgeber
47 Eingang
50 Inverter
51 Bus
52 Bus
53 Bus
54 Puffer
55 Puffer
56 Bus
57 Taktgeber
58 Klemme
70 Mikroprozessor
71 Quarz
72 Eingang
73 Ausgang
74 Ausgang
75 Ausgang

76 Ausgang
77 Kondensator
78 Eingang
80 Eingangsschutzschaltung
84 Transistor
85 Diode
86 Diode
87 Diode
88 Diode
89 Kondensator
90 Kondensator
91 Diode
87 Diode
88 Diode
89 Kondensator
90 Kondensator
91 Leitung
92 Leitung
93 Leitung
94 Leitung
95 Überwachungsschaltung
96 Impuls
97 Impuls

**Patentansprüche**

1. Vorrichtung in einer Servolenkung eines Fahrzeugs zur Steuerung einer elektromagnetisch betätigbaren, hydraulischen Drosselstelle für die geschwindigkeitsabhängige Einstellung der verfürbar gehaltenen Hilfskraft, wobei als Drosselstelle ein Wandler vorgesehen ist, der als elektromagnetisch betätigbares, hydraulisches Ventil aufgebaut ist, das in kurzer Folge in Abhängigkeit von geschwindigkeitsabhängigen, Impulsen angesteuert wird, dadurch gekennzeichnet, daß die den Wandler (19) austeuernden Impulse digital entbereitet werden und daß ein mit konstanter Taktfrequenz hochzählender Vorwärtszähler (1, 32) sowie ein ihm nachgeschalteter Zwischenspeicher (2, 33),vorgesehen sind, denen ein impulsförmiges, geschwindigkeitsabhängiges Signal zugeführt wird, wobei der Vorwärtszähler (1, 32) jeweils dann zurückgesetzt wird, wenn die Daten inüdem Zwischenspeicher (2, 33) übernommen sind, worauf mit der so gewonnenen Geschwindigkeitsinformation eine in einen Festwertspeicher (5, 35) abgelegte Funktionstabelle adressiert wird und wobei am Ausgang des Festwertspeichers (5, 35) Daten entnommen werden, die der Aufbereitung der den Wandler (19) ansteuernden Impulse dienen.

2. Vorrichtung nach Anspruch 1, dadurch gekennzeichnet, daß an den Ausgängen des Festwertspeichers (5; 35) puffer (8, 9; 38, 39) angeschlossen sind, die ihrerseits an einem Impulslängenzähler (11; 41) angeschlossen sind, der eine bistabile Kippstufe (13; 43) steuert, die über eine Endstufe (Transistoren 16, 18) den Wandler (19) betätigt.

3. Vorrichtung nach Anspruch 2, dadurch gekennzeichnet, daß dem Vorwärtszähler (32) ein Vorteiler (31) vorgeschaltet ist, der einen Takt variabler Frequenz an den Vorwärtszähler (32) liefert.

4. Vorrichtung nach Anspruch 2, dadurch gekennzeichnet, daß die Ausgänge der Kippstufe (13; 43) an die Steuereingänge der puffer (8, 9; 38, 39) zu deren Ein- und Ausschalten zurückgeführt sind.

5. Vorrichtung nach Anspruch 4, dadurch gekennzeichnet, daß einem der puffer (54) ein Inverter (50) vorgeschaltet ist.

6. Vorrichtung nach den Ansprüchen 1 bis 4, dadurch gekennzeichnet, daß die Endstufe (Transistoren 16, 18) symmetrisch an den Ausgängen der bistabilen Kippstufe (43) angeschlossen ist.

7. Vorrichtung nach einem oder mehreren der vorangehenden Ansprüche, dadurch gekennzeichnet, daß der Vorwärtszühler (1) und der Impulslängenzähler (11) von einem gemeinsamen Taktgenerator gespeist werden.

8. Vorrichtung nach Anspruch 2, dadurch gekennzeichnet, daß die Funktionen des Vorwärtsählers (1; 31, 32), des Zwischenspeichers (2; 33), der Puffer (8, 9; 38, 39), des Impulslängenzählers (11; 41) und der bistabilen Kippstufe (13; 43) durch einen Mikroprozessor (70) übernommen werden und der Vorwärtszähler (1; 31, 32) den Systemtakt des Mikroprozessors (70) erhält.

**Claims**

1. A device in a servo steering of a vehicle for controlling a solenoid-actuated hydraulic throttle for the speed-dependent setting of the stand-by power assistance, having as a throttle a transducer designed as a solenoid-actuated hydraulic valve controlled by short-sequence pulses dependent on travelling speed, characterised in that the pulses controlling the transducer (19) are processed as digits, and that a forward counter (1, 32) having a constant cycle frequency and a count buffer (2, 33) arranged in sequence, can receive a pulse signal dependent on speed, whereafter the add counter (1, 32) resets as soon as the data is stored in the count buffer (2, 33), upon which a function table stored in a read only memory (5, 35) is addressed by the speed information gained, and the output of the read only memory (5, 35) provides data, which serves to process the pulses controlling the transducer (19).

2. A device according to claim 1, characterised in that buffers (8, 9; 38, 39) are connected to the outputs of the read only memory (5; 35), and these buffers are connected to a pulse width counter (11; 41), controlling a bistable trigger stage (flip-flop) (13; 43) actuating the transducer (19) via an output stage (transistor 16, 18).

3. A device according to claim 2, characterised in that a distributor (31) supplying a variable frequencey cycle to the forward counter (32) is arranged in series before that counter.

4. A device according to claim 2, <u>characterised</u> in that the outputs of the trigger stage (13, 43) are looped on the control inputs to buffers (88, 9; 38, 39) for their on and off actuation.

5. A device according to claim 4, <u>characterised</u> in that an inverter (50) is arranged in series before one of the buffers (54).

6. A device according to claims 1 to 4, <u>characterised</u> in that the final stage (transistors 16, 18) is symmetrically connected to the outputs of the bistable trigger stage (43).

7. A device according to one or more of the preceeding claims, <u>characterised</u> in that the forward counter (1) and the pulse width counter (11) are fed by a common pulse generator.

8. A device according to claim 2, <u>characterised</u> in that operations of the forward counter (1; 31, 32), the count buffer (2; 33), the buffers (8, 9; 38, 39), the pulse width counter (11; 41) and the bistables trigger stage (13; 43) are taken over by a microprocessor (70) and the forward counter (1; 31, 32) receives the system cycle of the microprocessor (70).

## Revendications

1. Dispositif dans une servo-direction d'un véhicule pour commander un organe de réglage hydraulique à commande électromagnétique pour régler en fonction de la vitesse la force d'assistance maintenue en disponibilité, ledit organe de réglage étant un transducteur constitué par une soupape hydraulique à commande électromagnétique qui est pilotée en séquences courtes sur la base d'impulsions dépendant de la vitesse, caractérisé en ce que les impulsions de commande du transducteur (19) sont préparées de manière numérique et en ce qu'il est prévu un compteur de marche avant (1, 32) à totalisation et à fréquence constante, ainsi qu'une mémoire intermédiaire (2, 33) qui le suit, ces éléments recevant un signal pulsé dépendant de la vitesse, ledit compteur (1, 32) étant remis à zéro quand les données sont changées dans la mémoire intermédiaire (2, 33), après quoi l'information de vitesse ainsi acquise sert d'adresse dans un tableau fonctionnel stocké dans une mémoire morte (5, 35) et l'on prélève dans la mémoire morte (5, 35) des données qui servent à la préparation des impulsions de commande du transducteur (19).

2. Dispositif selon la revendication 1, caractérisé en ce que des éléments tampons (8, 9; 38, 39) sont raccordés aux sorties de la mémoire morte (5, 35) et à un compteur de longueur d'impulsions (11, 41), lequel commande une bascule bistable (13, 43) qui actionne le transducteur (19) à travers un étage final (transistors 16, 18).

3. Dispositif selon la revendication 2, caractérisé en ce que de compteur de marche avant (32) est précédé d'un pré-diviseur (31) qui délivre au compteur de marche avant (32) une cadence dont la fréquence est variable.

4. Dispositif selon la revendication 2, caractérisé en ce que les sorties de la bascule (13; 43) sont raccordées en rétroaction aux entrées de commande des éléments tampons (8, 9; 38, 39) pour les enclencher et les déclencher.

5. Dispositif selon la revendication 4, caractérisé en ce qu'un inverseur (50) est monté sur l'entrée de l'un des éléments tampons (54).

6. Dispositif selon l'une des revendications 1 à 4, caractérisé en ce que l'étage final (transistors 16, 18) est raccordé symétriquement aux sorties de la bascule bistable (43).

7. Dispositif selon l'une ou plusieurs des revendications précédentes, caractérisé en ce que le compteur de marche avant (1) et le compteur de longueur d'impulsions (11) sont alimentés par un générateur d'impulsions commun.

8. Dispositif selon la revendication 2, caractérisé en ce que les fonctions du compteur de marche avant (1; 31, 32), de la mémoire intermédiaire (2; 33), des éléments tampons (8, 9; 38, 39), du compteur de longueur d'impulsions (11; 41) et de la bascule bistable (13; 43) sont remplies par un microprocesseur (70) et en ce que le compteur de marche avant (1; 31, 32) reçoit la fréquence de base du microprocesseur (70).

FIG.1

FIG.2

FIG.3

FIG.4

FIG.5

FIG.6